# EUROPEAN PATENT APPLICATION

(11) **EP 0 919 973 A2**
(43) Date of publication of application: **02.06.1999**
(21) Application number: 98120078.5
(22) Date of filing: 23.10.1998
(51) Int. Cl.: G08B 29/18

(54) **Double technology combined alarm system with a contained and controlled consumption**

(30) Priority: 28.10.1997 IT RE970078
(71) Applicant: Meta System S.p.A., 42100 Reggio Emilia (IT)
(72) Inventor: Simonazzi, Giuseppe, 42100 Reggio Emilia (IT)
(74) Representative: Lecce, Giovanni

(57) **Abstract**

In a double technology alarm system a first sensor is always active and, beside signalling the intrusions itself, also acts as an activator for a second sensor using a different technology.

## Description

The invention relates to double technology combined alarm systems with a contained and controlled consumption, wherein already operating sensors, such as for instance microwave o IR sensors, besides their function of intrusion signalling, also act as activators for different technology sensors, such as the ultrasound volumetric or microwave ones. The activation is performed only if a confirmation of the intrusion having taken place has to be confirmed.

The combination of stand-by IR sensors and microwave sensors allows the realisation of alarm systems fed by simple wireless batteries.

Alarm systems are at present known with volumetric sensors wherein a double technology is used, usually microwave and passive IR, in order to reduce the possibility of false alarms.

Microwaves sensors, in fact, while being much more sensitive that the IR ones, have the drawback of not being able to operate in a circumscribed manner in the rooms where they are installed, especially if large glazed surfaces or panels that do not reflect the microwaves emitted by the sensors are present.

Passive IR sensors, vice-versa are not able to pass through walls, but are sensitive to warm air currents and direct sun radiation.

Another type of technology, based on ultrasounds, is commonly adopted in the automotive field, but has been given up for a long time in domestic protection, because of the facility of false alarms, caused by interferences that are often present in the protected rooms.

Independently on the technology adopted it is in any case indispensable not to loose sight of the system absorption factor, as, as is well known, all alarm systems are designed to be in condition of operating for some time even in the absence of electric feeding by the mains, but only by battery feeding.

Obviously, the greater the absorption of the adopted sensor, the lower the autonomy of the battery system. Because of the above reasons, in almost all the present double technology alarm systems, one of the two sensors is an IR sensor, as the latter is characterised by a substantially minor consumption.

In any case, the two described technologies, need, because of the not negligible absorption, external feeding systems from the mains, and are not utilisable for wireless battery-fed systems.

If one analyses the systems of the latter type, wireless and with signals transmitted by radio, it is evident that the only volumetric sensor adopted at present is the IR radiation one, and such choice arises from the fact that this is the only technology that can ensure the low absorption necessary for sensors to be really autonomous. Actually a simple cell suffices for them to obtain a very high autonomy, of the order of at least six months to one year.

Object of the present invention is to obviate the above drawbacks and/or limitations. The invention, as is characterised by the claims, solves the problem by means of double technology combined systems, with a contained and controlled consumption, wherein one of the two sensors, always active, besides detecting intrusions, act as an "activator" for the second sensor employing a different technology.

In this way there is obtained the double effect of a double technology, very useful to prevent false alarms, together with a consumption comparable with that of an individual sensor.

The invention is described with more details hereunder, according to embodiments solely given by way of non limiting example, with reference to the attached drawings, wherein:
Figure 1 is a general layout of an alarm system, according to the invention, applied to a motor-vehicle,
Figure 2 is a example of a flowchart of an operating manner of an antitheft gearcase coupled with two different technology sensors, and
Figure 3 is a diagram of another embodiment of a double technology alarm system,
Figure 4 is the related flowchart.

The figures show double technology combined alarm systems wherein a limitation of the overall consumption of the devices is obtained, without giving up the effectiveness of the double technology of intrusion detection in volumetric systems.

A first embodiment refers to an application for motor-vehicles wherein the always active microwave sensor, with lower absorption, acts also as an activator for the second ultrasound volumetric sensor which confirms or does not confirm the taking place of the intrusion.

The second embodiment refers to an application of the domestic type wherein the device is made up by an always active IR sensor a stand-by microwave sensors. In this way, the whole circuit may be fed by a simple battery and constitutes one of the anti-intrusion devices of a wireless system.

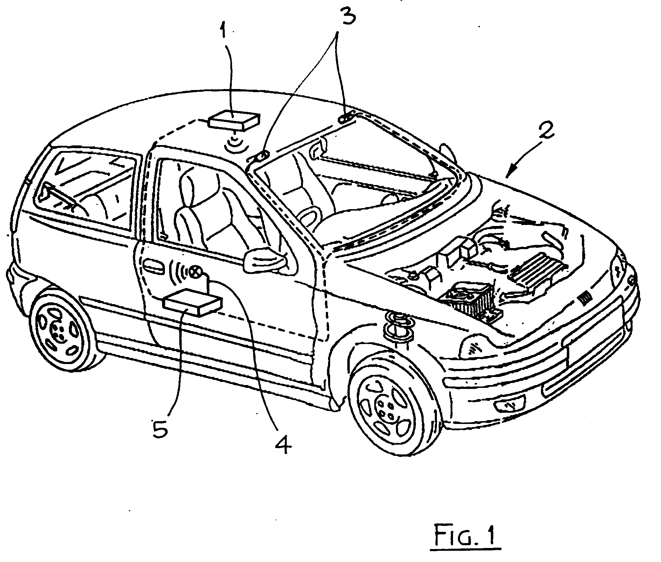

Figure 1 shows that the use of one only microwave alarm system (1) is not advisable for applications in motor-vehicles (2), because of the already mentioned problem of transparency said microwaves encounter in the presence of wide glazed surfaces, such as those of car-windows.

The use of ultrasound sensors (3) is without any doubt to be preferred as they remain circumscribed within the car interior compartment, but in this case it is certainly necessary to come to a compromise in the relation between the sensitivity of the system and the possibility of false alarms.

On the contrary, by realising a circuit wherein the microwave sensor (1) is always active and, in case of intrusion, activates the ultrasound sensor (3) set at a high sensitivity and able to confirm the break-in, an alarm system according to the invention is obtained which is very sensitive, almost immune to false alarms and with an energy consumption comparable to the one of the lower consumption technology, and always active.

By adjusting the microwave sensor (1) at a very high sensitivity, so as to extend its action through the windows and outside the car (2), it is also possible to configure an alarm system with a "warning", i.e. able to signal with discretion, for instance through an intermittent buzzer (4), the presence of movement in the space about the car, without the necessity for the real alarm to step in, as the second ultrasound sensor (3), while having been activated, does not give its assent because the possible break-in has not yet taken place.

In this way a preliminary and strong deterrent is provided against wrongdoers that are about to effect break-ins, with no additional costs for the system.

In any case, the antitheft gearcase (5) must be programmed to elaborated the signals received, so as to prevent false alarms that may arise from transient phenomena that may happen at the time when the second sensor is activated.

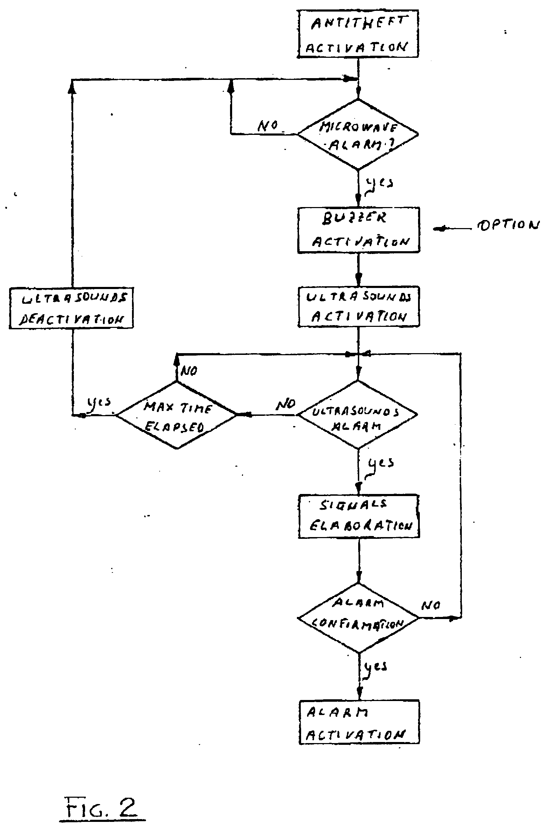

The operating sequence for the antitheft gearcase (5) may be the one represented, by way of example, in the flowchart of Figure 2.

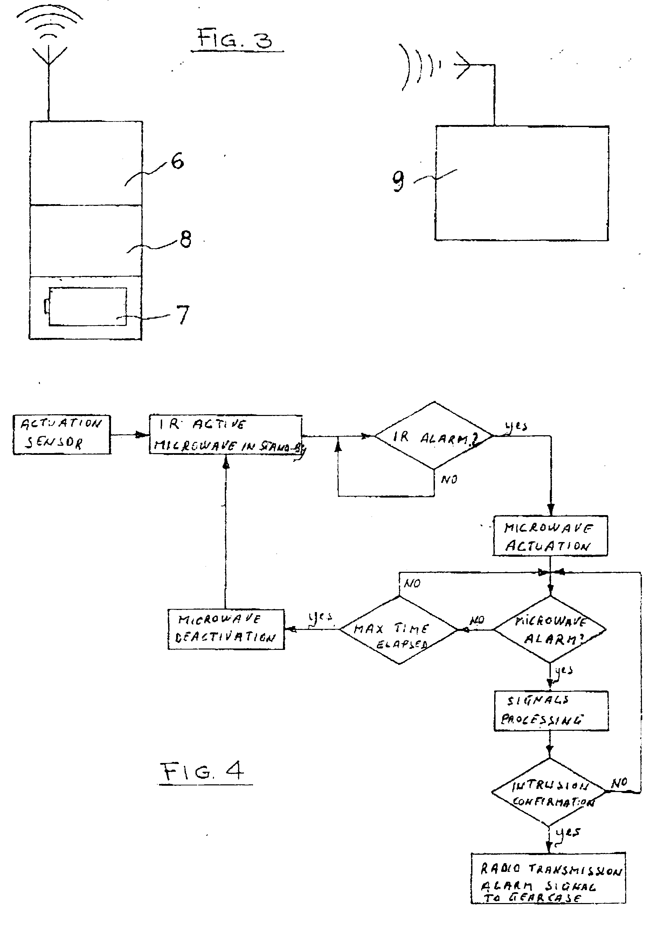

In the alarm system of Figure 3, the always active sensor is, instead, an IR sensor (6); this is due to the necessity of having a low absorption, as the sensor is battery-fed (7).

In case of detection of a possible intrusion, the IR sensor (6) activates the microwave sensor (8) and, if also the latter confirms the movement, due to the intrusion taking place, the radio transmission to the alarm gearcase (9) is activated. As the microwave sensor (8) is activated only in case of detection of movement by the IR sensor (6), it is obvious that the absorption of the whole alarm system will correspond substantially to that of the IR sensor, with ensuing possibility of battery feeding. Also in this case an elaboration of the signals is necessary, to prevent false alarms that may ensue from the mutual interaction of both sensors. For this to be possible, the elaboration must take place in the inside of each double technology device, so as to transmit by radio the respective alarm signals to the gearcase (9) only in case of a real intrusion. The programmed operating sequence of the above described system running may be of the type represented, for instance, by the flowchart of Figure 4.

Even though the invention has been described and illustrated according to embodiments solely given by way of non limiting example, it will be obvious to those skilled in the art that many modifications in the compositions of the systems, the adopted and/or comparable and/or alternative types of sensors, the programming of gearcases and/or the same sensors, may be introduced without for this falling outside its scope and aim.

## Claims

1. Double technology alarm systems, characterised in that one of the sensing means, employing a type of technology, has a low consumption, is always active and constitutes the activating element for a second sensor means, employing a different technology, and operating only upon activation by said first sensing means; the signals emitted by said first and said second sensing means being sent, already elaborated or still to be elaborated, to an alarm activation antitheft gearcase, suitably readied.

2. Double technology alarm systems according to claim 1, characterised in that they comprise always active, low consumption first sensing means, which, besides their usual function of signalling possible intrusions, constitute the activation means of second sensing means; said activation being effected only if the detection of the first sensing means should be confirmed, because of a real intrusion.

3. Double technology alarm systems according to claims 1 or 2, characterised in that said always active first sensing means are microwave sensors, and said second sensing means, activated by said first sensing means only in case of confirmation of a real intrusion, are ultrasound sensors; the signals emitted by said systems being directly sent to an antitheft gearcase which is programmed for the elaboration of the signals received by different technology sensors.

4. Double technology alarm systems according to claims 1 or 2, characterised in that said always active first sensing means are IR sensors, and said second sensing means, activated by said first sensing means only in case of confirmation of a real intrusion, are ultrasound stand-by sensors; said systems being feedable also by one only battery in wireless alarm systems, wherein the signals emitted by the first and the second sensors are elaborated in the inside of each double technology device, before being sent by radio to the antitheft gearcase only in case of a real intrusion.

5. Double technology alarm systems according to claims 1-4, characterised in that the first sensing means are always active and the second sensing means step in only the moment when they are activated by the first sensing means and only in case of confirmation of an intrusion taking place; in said combinations of double technology sensors sequentially operating in function of the activation of the second sensing means by the first sensing means, the overall consumption is substantially comparable to the consumption of the first sensing means only.
